# FASCICULE DE BREVET EUROPEEN

(11) **EP 2 304 652 B1**
(45) Date de publication et mention de la délivrance du brevet: **30.11.2011**
(21) Numéro de dépôt: 09772341.5
(22) Date de dépôt: 23.06.2009
(51) Int. Cl.: G06K 19/07

(54) **ÉTIQUETTE ÉLECTRONIQUE DE TYPE RFID**
ELEKTRONISCHES RFID-ETIKETT
ELECTRONIC RFID TAG

(30) Priorité: 01.07.2008 FR 0854446
(43) Date de publication de la demande: 06.04.2011
(73) Titulaire: Schneider Electric Industries SAS, 92500 Rueil-Malmaison (FR)
(72) Inventeur: BERNARD, Jacques, F-16340 l'ISLE D'ESPAGNAC (FR); CHARNEAU, Christian, F-16430 Champniers (FR)
(74) Mandataire: Bié, Nicolas
(86) Numéro de dépôt international: PCT/EP2009/057778
(87) Numéro de publication internationale: WO 2010/000641

(56) Documents cités:
- EP-A- 0 899 682
- WO-A-01/31557
- WO-A-2004/001939

## Description

La présente invention se rapporte à une étiquette électronique (appelée également transpondeur, tag ou smart label) possédant des moyens de stockage de données et des moyens d'échange de données avec une station de lecture/écriture au moyen d'une technologie RFID (Radio Frequency Identification - Identification par radio fréquence).

Les systèmes d'échange de données par technologie RFID sont déjà largement utilisés dans l'industrie pour reconnaître et/ou identifier à une distance rapprochée et dans un minimum de temps tout type d'objets porteurs d'une telle étiquette en utilisant des ondes radio. La station de lecture/écriture et l'étiquette possèdent une antenne formée par un circuit oscillant dans lequel on peut créer ou capter un champ électromagnétique qui permet une communication par couplage électromagnétique (appelé aussi couplage inductif) avec tout circuit oscillant placé à proximité dans une zone d'action ou zone de dialogue. L'étiquette est ainsi capable de recevoir un signal radio et de renvoyer en réponse un signal différent contenant une information pertinente.

Les étiquettes RFID possèdent une unité centrale comportant un microprocesseur et une mémoire qui permet de stocker diverses informations d'identification, de reconnaissance et/ou de process. Certaines étiquettes permettent uniquement une lecture de leurs données stockées lorsqu'une station est placée à proximité mais d'autres permettent en plus une écriture des données (écriture unique ou multiple) stockées dans l'étiquette. Par ailleurs, dans le cas d'une étiquette dite passive, le signal électromagnétique créé par l'antenne de la station de lecture/écriture sert également à alimenter électriquement l'étiquette lorsque celle-ci passe dans la zone d'action. En utilisant la puissance produite par le champ électromagnétique de la station, l'étiquette présente donc l'avantage de ne pas nécessiter d'alimentation interne telle qu'une pile.

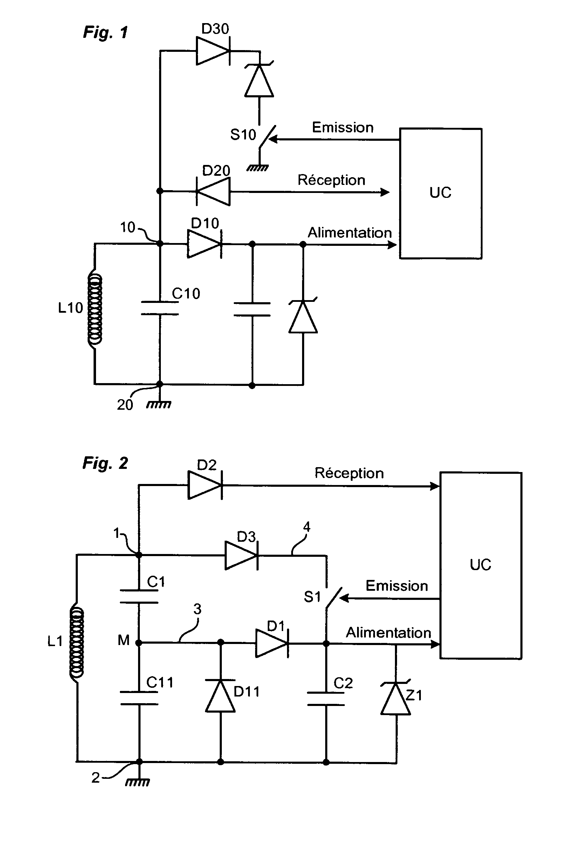

De manière plus précise, en référence à la figure 1, dans une étiquette RFID classique, une première borne 10 du circuit oscillant (L10, C10) de l'étiquette est reliée à un premier redresseur D10 pour l'alimentation de l'unité centrale UC, à un deuxième redresseur D20 pour démoduler et mettre en forme les signaux reçus en provenance de la station et à un troisième redresseur D30 pour moduler l'amplitude des oscillations de l'étiquette à l'aide d'un commutateur S10 et ainsi émettre vers la station. La deuxième borne 20 du circuit oscillant est reliée à la masse. Avec un tel schéma, lors de l'émission de l'étiquette vers la station, la puissance disponible pour l'alimentation chute considérablement et peut même devenir nulle. Dans une étiquette classique, afin de pouvoir gérer la baisse inévitable de la puissance lors de l'émission, il est nécessaire de :
- prévoir une marge de puissance suffisante ainsi qu'une réserve d'énergie avant de commencer à émettre un signal vers la station. Ceci entraîne une réduction de la portée ainsi qu'un retard au démarrage dû au chargement préalable du réservoir d'énergie.
- limiter la durée d'émission puis de l'interrompre pour permettre à la réserve d'énergie de revenir à chaque fois à un niveau acceptable avant de poursuivre l'émission. Ceci se traduit par une diminution de la vitesse de transmission.

Le document WO 01/31557 A1 décrit une étiquette électronique dont le circuit oscillant comporte deux inductances en série et un condensateur en parallèle. Le point milieu entre les inductances permet de transmettre, également pendant la phase de modulation, de l'énergie au condensateur de stockage pour l'alimentation du circuit de traitement des données.

Le but de l'invention est de proposer une étiquette électronique de type RFID dans laquelle il est possible d'émettre des signaux vers la station sans chute de puissance et donc en évitant les contraintes précitées.

Ce but est atteint par une étiquette électronique de type RFID comportant :
- une unité centrale,
- un circuit oscillant de type LC parallèle pour alimenter l'unité centrale et pour émettre des données par modulation d'amplitude en utilisant un commutateur, le circuit oscillant comportant une première borne et une seconde borne.
caractérisée en ce que :
- le circuit oscillant comporte, entre sa première borne et sa seconde borne, deux condensateurs montés en série et une inductance montée en parallèle des deux condensateurs,
- l'unité centrale est alimentée via une ligne conductrice d'alimentation connectée à un point milieu formé entre les deux condensateurs en série,
   ,
- le commutateur est monté en série sur une ligne conductrice d'émission connectée d'une part sur la ligne conductrice d'alimentation et d'autre part sur la première borne du circuit oscillant,
- une première diode est montée sur la ligne conductrice d'alimentation,
- une seconde diode est connectée d'une part au point milieu formé par les deux condensateurs en série et d'autre part sur la seconde borne du circuit oscillant.

Selon une autre particularité, l'étiquette comporte un condensateur d'alimentation connecté d'une part sur la ligne conductrice d'alimentation, en aval de la première diode, et d'autre part sur la seconde borne du circuit oscillant.

Selon une autre particularité, l'étiquette comporte une diode Zener montée en parallèle du condensateur d'alimentation.

Selon une autre particularité, l'étiquette comporte une diode montée en série avec le commutateur sur la ligne conductrice d'émission.

Avec la solution de l'invention, l'étiquette ne subit pas de perte de puissance pour son alimentation, même lors de l'émission. La puissance est inchangée et il n'est pas nécessaire de disposer d'une marge de puissance. De plus, la réserve d'énergie nécessaire est beaucoup plus faible. En conséquence, la portée est plus importante qu'avec un schéma classique, le démarrage est plus rapide car aucune réserve d'énergie doit être chargée, la vitesse de transmission reste maximale et la transmission peut durer aussi longtemps que nécessaire sans perte de puissance.

De plus, selon l'invention, le taux de modulation à l'émission est facilement configurable en jouant sur le ratio entre les deux condensateurs ou entre les deux inductances.

D'autres caractéristiques et avantages vont apparaître dans la description détaillée qui suit en se référant à un mode de réalisation donné à titre d'exemple et représenté par les dessins annexés sur lesquels :
- la figure 1 est le schéma d'une étiquette électronique selon l'art antérieur,
- la figure 2 est le schéma d'une étiquette électronique selon un premier mode de réalisation de l'invention,
- la figure 3 est le schéma d'une étiquette électronique selon un second mode de réalisation qui ne fait pas partie de l'invention.

Dans la description ci-dessous, les termes amont et aval doivent être compris en allant du circuit oscillant vers l'unité centrale. De plus l'expression "une ligne conductrice" doit être comprise comme une branche de circuit électrique pouvant comporter un ou plusieurs composants.

La figure 1 a déjà été décrite ci-dessus.

Une étiquette électronique de type RFID selon l'invention est destinée à dialoguer sans contact selon la technologie RFID avec une station de lecture/écriture (non représentée). La station comporte notamment une antenne par laquelle elle génère un champ magnétique et dialogue avec chaque étiquette électronique passant à sa portée.

En référence à la figure 2, l'étiquette comporte pour sa part une antenne constituée d'un circuit oscillant de type LC parallèle et une unité centrale UC incluant notamment une mémoire et des moyens de traitement de données du type microprocesseur pour interpréter les requêtes envoyées par la station de lecture/écriture et pour envoyer les informations demandées par la station. Une étiquette électronique de type RFID dite passive ne comporte pas d'alimentation interne et utilise son circuit oscillant pour capter la puissance électromagnétique de la station et alimenter ses circuits électroniques, notamment son unité centrale. L'étiquette électronique est alors alimentée par la "porteuse" émise à partir de l'antenne de la station dès qu'elle arrive dans les limites de portée de ladite station. L'étiquette électronique exécute les ordres en provenance de la station de lecture/écriture, mémorise des données et transmet les données demandées vers la station de lecture/écriture.

Dans la configuration de l'invention représentée en figure 2, le circuit oscillant de l'étiquette comporte un premier condensateur C1 et un second condensateur C11 montés en série entre une première borne 1 et une seconde borne 2 du circuit oscillant et une inductance L1 montée en parallèle des deux condensateurs C1, C11 en série. La seconde borne du circuit oscillant est reliée à la masse.

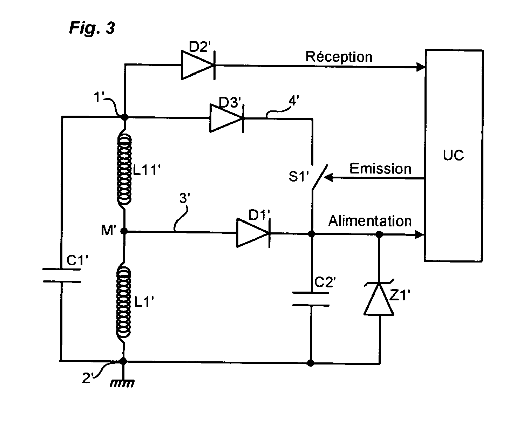

Dans une seconde configuration qui ne fait pas partie de l'invention, représentée en figure 3, le circuit oscillant de l'étiquette comporte une première inductance L1' et une seconde inductance L11' montées en série entre la première borne 1' et la seconde borne 2' du circuit oscillant et un condensateur C1' monté en parallèle des deux inductances en série.

Chacune de ces deux configurations de circuit oscillant permet à l'étiquette d'émettre vers la station sans chute de puissance. Pour cela, dans les deux configurations, une ligne conductrice 3, 3' destinée à l'alimentation de l'unité centrale de l'étiquette est connectée via une diode de polarisation D1, D1' à un point milieu M, M' formé entre les deux condensateurs C1, C11 en série (figure 2) ou entre les deux inductances L1', L11' en série (figure 3). La diode D1, D1' est par exemple orientée passante du point milieu M de connexion vers l'unité centrale UC.

Pour émettre des données vers la station, l'étiquette comporte dans ses deux configurations un commutateur S1, S1' commandé par l'unité centrale UC pour créer une modulation d'amplitude des oscillations de l'étiquette. Le commutateur S1, S1' est monté en série sur une ligne conductrice 4, 4' d'émission connectée d'une part sur la ligne conductrice 3, 3' d'alimentation et d'autre part via une diode D3, D3' à la première borne 1, 1' du circuit oscillant. La diode D3, D3' est par exemple orientée passante du circuit oscillant vert l'unité centrale UC.

Pour interpréter les signaux reçus de la station, l'étiquette comporte dans ses deux configurations une diode de redressement D2, D2' et un circuit de traitement des signaux non représenté et non détaillé dans la présente demande. L'étiquette peut fonctionner en réception quelle que soit l'orientation de la diode D2, D2'.

Dans les deux configurations, l'étiquette comporte également un condensateur C2, C2' connecté d'une part sur la ligne conductrice 3, 3' d'alimentation, en aval par rapport à la diode D1, D1' et d'autre part sur la seconde borne 2, 2' du circuit oscillant. En parallèle de ce condensateur C2, C2', l'étiquette peut comporter une diode zener Z1, Z1' destinée à limiter la tension aux bornes du condensateur C2, C2' et ainsi à limiter la tension d'alimentation de l'unité centrale

Dans la configuration selon l'invention représentée en figure 2, l'étiquette comporte en outre une diode D11 destinée à polariser le point milieu M, cette diode D11 étant connectée d'une part sur le point milieu M, et d'autre part sur la seconde borne 2 du circuit oscillant.

Dans la première configuration, le taux de modulation est fixé par le ratio entre les valeurs de capacité des deux condensateurs C1, C11 et dans la seconde configuration, il est fixé par le ratio entre les valeurs des deux inductances L1', L11'.

En fonctionnement, dans les deux configurations, pour l'alimentation seule de l'unité centrale, le courant généré grâce au circuit oscillant charge à chaque alternance le condensateur C2, C2' via la diode D1, D1'. Le condensateur C2, C2' se décharge ensuite pour alimenter l'unité centrale UC. Lors de l'émission vers la station, le commutateur S1, S1' est commandé pour moduler l'amplitude. Lorsque le commutateur S1, S1' est fermé, le courant généré grâce au circuit oscillant alimente le condensateur C2, C2' via la diode D3, D3'. Le condensateur C2, C2' peut alors se décharger pour alimenter l'unité centrale UC. Cela signifie que même pendant l'émission, l'unité centrale UC reste alimentée avec un même niveau de puissance.

Il est bien entendu que l'on peut, sans sortir du cadre de l'invention délimité par les revendications, imaginer d'autres variantes et perfectionnements de détail et de même envisager l'emploi de moyens équivalents.

## Revendications

1. Etiquette électronique de type RFID comportant :
- une unité centrale (UC),
- un circuit oscillant de type LC parallèle pour alimenter l'unité centrale (UC) et pour émettre des données par modulation d'amplitude en utilisant un commutateur (S1), le circuit oscillant comportant une première borne (1) et une seconde borne (2).
**caractérisée en ce que** :
- le circuit oscillant comporte, entre sa première borne (1) et sa seconde borne (2), deux condensateurs (C1, C11) montés en série et une inductance (L1) montée en parallèle des deux condensateurs (C1, C11),
- l'unité centrale (UC) est alimentée via une ligne conductrice (3) d'alimentation connectée à un point milieu (M) formé entre les deux condensateurs (C1, C11) en série,
- le commutateur (S1) est monté en série sur une ligne conductrice (4) d'émission connectée d'une part sur la ligne conductrice (3) d'alimentation et d'autre part sur la première borne (1) du circuit oscillant,
- une première diode (D1) est montée sur la ligne conductrice d'alimentation (3),
- une seconde diode (D11) est connectée d'une part au point milieu (M) formé par les deux condensateurs (C1, C11) en série et d'autre part sur la seconde borne (2) du circuit oscillant.

2. Etiquette selon la revendication 1, **caractérisée en ce qu'**elle comporte un condensateur (C2) d'alimentation connecté d'une part sur la ligne conductrice d'alimentation (3), en aval de la première diode (D1), et d'autre part sur la seconde borne (2) du circuit oscillant.

3. Etiquette selon la revendication 2, **caractérisée en ce qu'**elle comporte une diode Zener (Z1) montée en parallèle du condensateur (C2) d'alimentation.

4. Etiquette selon l'une des revendications 1 à 3, **caractérisée en ce qu'**elle comporte une diode (D3) montée en série avec le commutateur (S1) sur la ligne conductrice (4) d'émission.

## Claims

1. Electronic tag of RFID type comprising:
- a central unit (UC),
- an oscillating circuit of parallel LC type for powering the central unit (UC) and for sending data by amplitude modulation using a switch (S1), the oscillating circuit comprising a first terminal (1) and a second terminal (2),
**characterized in that**:
- the oscillating circuit comprises, between its first terminal (1) and its second terminal (2), two capacitors (C1, C11) mounted in series and an inductor (L1) mounted in parallel with the two capacitors (C1, C11),
- the central unit (UC) is powered via a power supply conductor line (3) connected to a midpoint (M) formed between the two capacitors (C1, C11) in series,
- the switch (S1) is mounted in series on a send conductor line (4) connected on the one hand to the power supply conductor line (3) and on the other hand to the first terminal (1) of the oscillating circuit,
- a first diode (D1) is mounted on the power supply conductor line (3),
- a second diode (D11) is connected on the one hand to the midpoint (M) formed by the two capacitors (C1, C11) in series and on the other hand to the second terminal (2) of the oscillating circuit.

2. Tag according to Claim 1, **characterized in that** it comprises a power supply capacitor (C2) connected on the one hand to the power supply conductor line (3), downstream of the first diode (D1), and on the other hand to the second terminal (2) of the oscillating circuit.

3. Tag according to Claim 2, **characterized in that** it comprises a Zener diode (Z1) mounted in parallel with the power supply capacitor (C2).

4. Tag according to one of Claims 1 to 3, **characterized in that** it comprises a diode (D3) mounted in series with the switch (S1) on the send conductor line (4).

## Patentansprüche

1. Elektronisches Etikett vom Typ RFID, das Folgendes aufweist:
- eine Zentraleinheit (UC),
- einen parallelen Schwingkreis vom Typ LC zur Speisung der Zentraleinheit (UC) und zum Senden von Daten durch Amplitudenmodulation unter Verwendung eines Wählschalters (S1), wobei der Schwingkreis eine erste Klemme (1) und eine zweite Klemme (2) aufweist,
**dadurch gekennzeichnet, dass**:
- der Schwingkreis zwischen seiner ersten Klemme (1) und seiner zweiten Klemme (2) zwei in Reihe geschaltete Kondensatoren (C1, C11) und eine zwischen den zwei Kondensatoren (C1, C11) parallelgeschaltete Drosselspule (L1) aufweist,
- die Zentraleinheit (UC) über eine leitfähige Speiseleitung (3) gespeist wird, die mit einem Mittelpunkt (M) verbunden ist, der zwischen den in Reihe geschalteten Kondensatoren (C1, C11) geformt ist,
- der Wählschalter (S1) in Reihe auf eine leitfähige Sendeleitung (4) geschaltet ist, die einerseits mit der leitfähigen Speiseleitung (3) und andererseits mit der ersten Klemme (1) des Schwingkreises verbunden ist,
- eine erste Diode (D1) auf die leitfähige Speiseleitung (3) montiert ist,
- eine zweite Diode (D11) einerseits mit dem von den zwei in Reihe geschalteten Kondensatoren (C1, C11) geformten Mittelpunkt (M) und andererseits mit der zweiten Klemme (2) des Schwingkreises verbunden ist.

2. Etikett nach Anspruch 1, **dadurch gekennzeichnet, dass** es einen Speisekondensator (C2) aufweist, der einerseits mit der leitfähigen Speiseleitung (3) hinter der ersten Diode (D1) und andererseits mit der zweiten Klemme (2) des Schwingkreises verbunden ist.

3. Etikett nach Anspruch 2, **dadurch gekennzeichnet, dass** es eine Zener-Diode (Z1) aufweist, die mit dem Speisekondensator (C2) parallelgeschaltet ist.

4. Etikett nach einem der Ansprüche 1 bis 3, **dadurch gekennzeichnet, dass** es eine Diode (D3) aufweist, die mit dem Wählschalter (S1) auf der leitfähigen Sendeleitung (4) in Reihe geschaltet ist.
